# EUROPÄISCHE PATENTSCHRIFT

(11) **EP 0 852 702 B1**
(45) Veröffentlichungstag und Bekanntmachung des Hinweises auf die Patenterteilung: **21.11.2001**
(21) Anmeldenummer: 96938939.4
(22) Anmeldetag: 17.09.1996
(51) Int. Cl.: G01F 1/56

(54) **INDUKTIVER DURCHFLUSSMESSER**
INDUCTIVE FLOW METER
DEBITMETRE INDUCTIF

(30) Priorität: 27.09.1995 DE 19535997
(43) Veröffentlichungstag der Anmeldung: 15.07.1998
(73) Patentinhaber: KETELSEN, Broder, D-37124 Rosdorf (DE); KETELSEN, Andres, D-37124 Rosdorf (DE)
(72) Erfinder: KETELSEN, Andres, D-37124 Rosdorf (DE); KETELSEN, Jörn-Ove, D-37139 Adelebsen (DE)
(74) Vertreter: Kuhnen & Wacker
(86) Internationale Anmeldenummer: DE9601762
(87) Internationale Veröffentlichungsnummer: WO9712208

(56) Entgegenhaltungen:
- DE-A- 1 573 066
- DE-A- 1 773 484
- DE-A- 2 009 513
- DE-A- 2 505 427
- DE-A- 3 401 377
- US-A- 3 924 466
- US-A- 4 358 963
- US-A- 4 428 241

## Beschreibung

Die Erfindung betrifft induktive Durchflußmesser mit einem von einer elektrisch isolierenden Innenwand begrenzten Strömungskanalabschnitt, der zwei einander über einen Querschnitt dieses Strömungskanalabschnittes diametral gegenüberstehende und dem zu untersuchenden Strömungsmittelstrom ausgesetzte Elektroden enthält. Zu den Elektroden sind Meßsignalleitungen isoliert hingeführt und ein Magnetfelderzeugungssystem außerhalb des Strömungskanalabschnittes dient zur Erzeugung eines den Strömungskanalabschnitt im Bereich des genannten, die Elektroden enthaltenden Querschnittes durchsetzenden Magnetfeldes, welches im wesentlichen senkrecht zur Verbindungslinie zwischen den Elektroden und senkrecht zur Längsachse des Strömungskanalabschnittes orientiert ist und zwischen Polschuhen des Magnetfelderzeugunssystems errichtet wird, welche auf einander gegenüberliegenden Seiten des Strömungskanalabschnittes angeordnet sind. Die Erregerwicklungen des Magnetfelderzeugungssystems können mit Gleichstrom oder mit Wechselstrom erregt werden und in dem die Elektroden enthaltenden Meßkreis kann ein von der Strömung eines elektrisch leitfähigen Strömungsmittels im Stromungskanalabschnitt abhängiges Meßsignal, nämlich je nach Erregung der Erregerwicklung des Magnetfelderzeugungssystems, ein Gleichspannungssignal oder ein Wechselspannungssignal abgeleitet werden. Induktive Durchflußmesser dieses allgemeinen Aufbaus und ihre Wirkungsweise sind dem Fachmann bekannt.

Aus der DE-OS 1 773 484 ist es bekannt, einen den Strömungskanalabschnitt enthaltenden Meßkanalkörper aus Kunststoff herzustellen und in ihm die Elektroden und die zu ihnen führenden Meßsignalleitungen einzugießen. Hierdurch wird eine definierte Lage der Elektroden und der Meßsignalleitungen relativ zum Strömungskanal erreicht und für die Fertigung großer Stückzahlen der Aufwand für Kalibrier- und Justierarbeiten vermindert.

Aus der US-PS 4,428, 241 ist es bekannt, die zu den Elektroden eines Durchflußmessers der hier betrachteten allgemeinen Art führenden Meßsignalleitungen auf einer Schaltungsträgerplatte nach Art einer gedruckten Schaltung anzuordnen, wobei diese Schaltungsträgerplatte relativ zu dem Magnetfelderzeugungssystem des Durchflußmessers durch gesonderte Halteeinrichtungen in definierter Lage gehalten wird, in der die Schaltungsträgerplatte sich neben einem den Strömungskanalabschnitt enthaltenden Meßkanalkörper befindet und ein Durchbruch der Schaltungsträgerplatte das Durchtreten eines Poles des Magnetfelderzeugungssystems zuläßt.

Die DE-OS 3 401 377 zeigt und beschreibt einen induktiven Durchmesser der eingangs definierten allgemeinen Art, bei dem in die Wandung eines den Strömungskanalabschnitt enthaltenden Meßkanalkörpers die dem Strömungsmittelstrom ausgesetzten Elektroden eingebettet sind, von denen aus Meßsignalleitungen durch umfangsmäßige und durch axiale Nuträume der Polschuhanordnung des Magnetfelderzeugungssystems geführt sind. Diese Meßsignalleitungen sind jedoch weder vom Meßkanalkörper noch vom Magnetfelderzeugungssystem in engen Grenzen in fester Lage gehalten.

Aufgabe der Erfindung ist die Schaffung eines induktiven Durchflußmessers der eingangs beschriebenen allgemeinen Art, welcher sich für die Fertigung in großen Stückzahlen eignet, einen vergleichsweise einfachen Aufbau bei hoher mechanischer Festigkeit und präziser Halterung seiner Teile aufweist und dessen Aufbau den Aufwand für Abgleich- und Justierarbeiten bei der Serienfertigung stark vermindert.

Diese Aufgabe wird erfindungsgemäß durch die im Anspruch 1 angegebenen Merkmale gelöst. Vorteilhafte Ausgestaltungen und Weiterbildungen sind Gegenstand der diesem Anspruch nachgeordneten weiteren Patentansprüche.

Folgende Vorteile des hier angegebenen induktiven Durchflußmessers seien hervorgehoben:

Die einzelnen Baugruppen oder Baueinheiten des hier vorgeschlagenen induktiven Durchflußmessers gestatten die Fertigung in Großserie und zu extrem niedrigen Herstellungskosten. Die Kalibrierparameter können im Stichprobenverfahren für ein Fertigungslos ermittelt werden, so daß nicht jedes Gerät einzeln durchgemessen werden muß.

Ein Betrieb unter Erregung der Erregerwicklungen des Magnetfelderzeugungssystems mit hohen Frequenzen bis zu 200 Hz gestattet die Lösung spezieller Regelungsaufgaben unter Verwendung eines induktiven Durchflußmessers der vorliegend angegebenen Art.

Der Aufbau bedingt, daß kostenintensive Abgleich- und Justierarbeiten größtenteils entfallen können und das Gerät über seine gesamte Betriebszeit einen stabilen Nullpunkt behält.

Nachfolgend werden einige Ausführungsbeispiele anhand der Zeichnungen beschrieben. Es stellen dar:
- Fig 1: eine schematische perspektivische Ansicht eines Meßkanalkörpers mit darin eingebetteten Elektroden und Meßsignalleitungen sowie an den Meßkanalkörper angesetzter Polschuhteile als Bestandteile eines nur abschnittsweise gezeigten Magnetfelderzeugungssystems zur Bildung eines induktiven Durchflußmessers der hier vorgeschlagenen Art;
- Fig. 2: einen Radialschnitt durch die Anordnung von Fig. 1 in einem die Elektroden enthaltenden Querschnittsbereich des Meßkanalkörpers,
- Fig. 3: eine perspektivische, schematische Darstellung eines teilweise aufgeschnitten wiedergegebenen Meßkanalkörpers zur Verdeutlichung der Einbettung der Elektroden und der Meßsignalleitungen in die Meßkanalkörperwand,
- Fig. 4: eine perspektivische Ansicht einer gegenüber Fig. 3 abgewandelten Ausgestaltung der Elektroden und der Meßsignalleitungen unter Weglassung des umgebenden Meßkanalkörpermaterials,
- Fig. 5: eine perspektivische Ansicht einer wiederum anderen Gestaltung der Elektroden und der Meßsignalleitungen, ebenfalls unter Weglassung des umgebenden Meßkanalkörpermaterials,
- Fig. 6: eine schematische perspektivische Ansicht ähnlich Fig. 1 von einer bevorzugten Ausführungsform des Meßkanalkörpers und von in Vertiefungen desselben einzusetzenden Polschuhteilen eines Magnetfelderzeugungssystems zur Bildung eines induktiven Durchflußmessers der hier vorgeschlagenen Art, und
- Fig. 7: eine ähnliche Darstellung wie Fig. 6 von einer gegenüber dieser Zeichnungsfigur abgewandelten Ausführungsform eines Meßkanalkörpers und in Vertiefungen desselben einzusetzenden Polschuhteilen zur Bildung eines anderen induktiven Durchflußmessers der hier angegebenen Art.

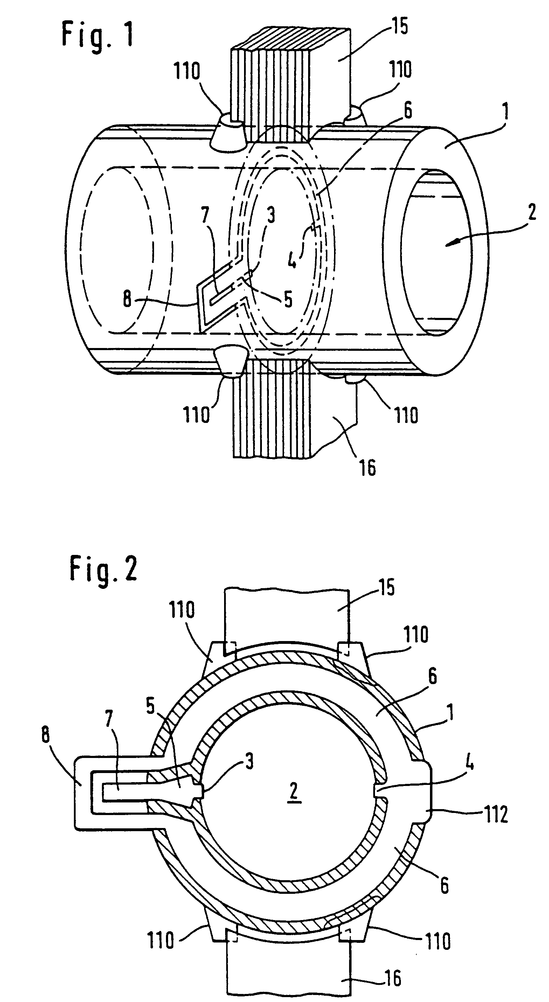

In Fig. 1 ist ein Meßkanalkörper 1 in Gestalt eines im wesentlichen hohlzylindrischen Rohrstückes gezeigt, welches als Kunststoff-Spritzgußteil ausgebildet ist.

Das Rohrstück enthält einen Strömungskanalabschnitt 2, durch welchen über geeignete Rohranschlüsse oder Rohranschlußstücke der Strom eines elektrisch leitfähigen Strömungsmittels geleitet wird, das Gegenstand der Messungen des induktiven Durchflußmessers ist. An der elektrisch isolierenden Innenwand des Strömungskanalabschnittes 2 des Meßkanalkörpers 1 stehen einander (wie aus Fig. 2 ersichtlich) Elektroden 3 und 4 gegenüber, welche dem zu untersuchenden Strömungsmittel ausgesetzt sind und zu denen isoliert Meßsignalleitungen 5 und 6 durch das Material des Meßkanalkörpers 1 hindurchgeführt sind, wobei die Meßsignalleitung 5 lediglich das kurze Wegstück zwischen der Elektrode 3 auf der Seite der Innenwand des Strömungskanalabschnitts 2 und der Meßkanalkörperaußenwand überbrückt, während die beiden halbkreisbogenförmigen Meßsignalleitungsabschnitte der Meßsignalleitung 6 die Verbindung von der Seite der Elektrode 4 zu der diametral gegenüberliegenden Seite des Meßkanalkörpers herstellen.

Die Anschlüsse zu den Meßsignalleitungen 5 und 6 haben die Gestalt von Anschlußfahnen 7 bzw. 8. Diese Anschlußfahnen stehen aus der zylindrischen Außenwand des Meßkanalkörpers 1 hervor. Die Anschlußfahne 8 umgibt die Anschlußfahne 7 U-förmig und bildet zusammen mit den zugehörigen Meßsignalleitungsabschnitten 6 einen Kurzschlußring, welcher in an sich bekannter Weise eine störungsfreie Signalübertragung zwischen der Elektrode 4 und der Meßkanalkörperseite gestattet, an der sich die Elektrode 3 befindet.

Auf der Oberseite und auf der Unterseite des Meßkanalkörpers 1 sind an diesen Haltesockel 110 angeformt, welche mit winkeligen Ausnehmungen derart versehen sind, daß in einander diametral gegenüberliegenden Bereichen der zylindrischen Außenfläche des Meßkanalkörpers 1 in einer Richtung senkrecht zur Verbindungslinie zwischen den Elektroden 3 und 4 und senkrecht zur Mittellängsachse des Strömungskanalabschnittes 2 in Aufsicht aus radialer Richtung rechteckige Führungsräume bestimmt werden, in die Polschuhteile 15 und 16 des Magnetfelderzeugungssystems eingeschoben werden. Die Polschuhteile 15 und 16 werden also durch die Sockelteile 110 in präziser Lage relativ zum Strömungskanal 2 des Meßkanalkörpers 1 und damit auch in präziser Lage relativ zu den Elektroden 3 und 4 und auch zu den jeweils zugehörigen Meßsignalleitungen 5 und 6 gehalten, nachdem die Elektroden und die Meßsignalleitungen fest in den Meßkanalkörper 1 eingeschlossen sind.

Diese Präzision der Teile des Magnetfelderzeugungssystems, des Meßkanalkörpers und der Elektroden und Meßsignalleitungen ergibt sich nicht etwa durch präzise Montage der Teile aneinander, sondern ist schon durch die Art und Weise der Fertigung des Meßkanalkörpers als Spritzgußteil oder aus Spritzgußteilen bestehend sowie durch den festen Einschluß der elektrischen Leiterteile darin vorgegeben.

Es sei hier angemerkt, daß bei der Ausführungsform nach den Figuren 1 und 2 und auch bei weiteren nachfolgend gezeigten und beschriebenen Ausführungsformen der Meßkanalkörper 1 als einheitliches Spritzgußteil ausgeführt ist, in das die Elektroden und die Meßsignalleitungen eingegossen und eingespritzt sind. In Abwandlung hiervon ist es möglich, den Meßkanalkörper 1 aus zwei Spritzguß-Formteilen auszuführen, die in einer Radialebene geteilt sind und die zusammensteckbar sind, wobei die Teilfuge mit Ausnehmungen im Bereich der Wandstärke des Meßkanalkörpers 1 solchermaßen versehen ist, daß passend geformte Baueinheiten aus den Elektroden und den damit fest verbundenen Meßsignalleitungen in diese Ausnehmungen eingelegt und dann die Spritzguß-Formteile zusammengespannt werden, so daß sich wiederum danach eine als Einheit zu handhabende Konstruktion aus den Meßkanalkörperteilen, den Elektroden und den Meßsignalleitungen ergibt.

Zu bevorzugen ist jedoch das Eingießen der Elektroden und der Meßsignalleitungen in den als Spritzguß-Formteil ausgebildeten Meßsignalkörper 1, da bei der Herstellung die Meßsignalleitungen und die damit jeweils fest verbundenen Elektroden in Kernlager der Spritzgußform in hochpräziser Lage zum Formhohlraum eingesetzt werden können und diese präzise Lage nach Ausformung des Meßkanalkörpers behalten. Als Kernlagerstützen können Ansätze der Leitergebilde, etwa in Gestalt der freiliegenden Enden der Elektroden 3 und 4, der Anschlüsse 7 und 8 und zusätzliche Ansätze verwendet werden, von denen einer in Fig. 2 mit 112 bezeichnet ist.

Gemäß einer in der Zeichnung nicht gezeigten Weiterbildung können in dem Meßkanalkörper 1 auch beispielsweise rohrförmige Einlagen etwa aus Keramik oder einem Verstärkungsmaterial eingespritzt oder eingegossen sein.

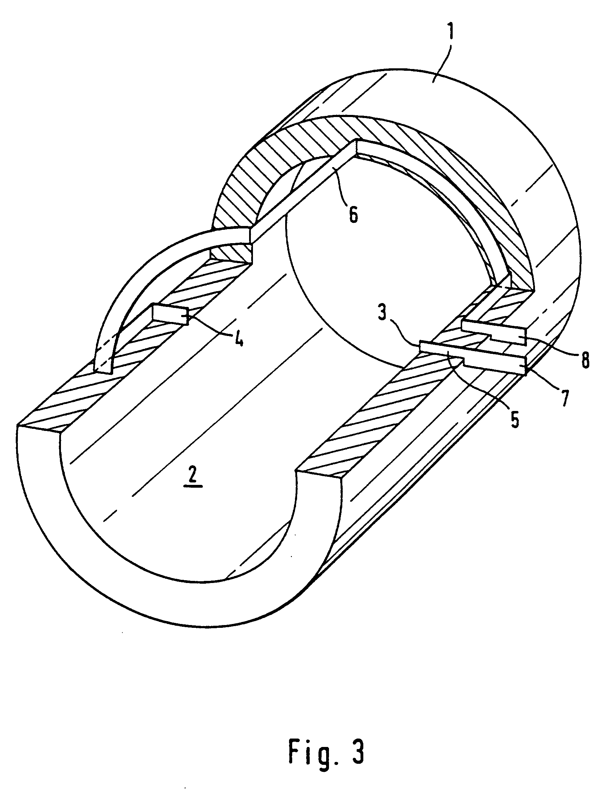

Der Verlauf der Meßsignalleitungen braucht insbesondere dann, wenn der Meßkanalkörper 1 ein einheitliches Spritzguß-Formteil ist, nicht auf eine die Elektroden 3 und 4 enthaltende Radialebene mit Bezug auf die Längsachse des Strömungskanalabschnittes 2 beschränkt zu werden. Einen möglichen Verlauf zeigt die schematische perspektivische Abbildung von Fig. 3. Von dem Anschluß 7 aus verläuft das kurze Meßsignalleitungsstück 5 unmittelbar durch die Wand des Meßkanalkörpers 1 hindurch zu der Elektrode 3. Unmittelbar daneben tritt vom Anschluß 8 aus ein Meßsignalleitungsabschnitt bis zur Mitte der Wandstärke des Meßkanalkörpers 1 in diesen ein, biegt dann in Axialrichtung um und geht nach einem axialen Wegstück, das länger ist als die Axialerstreckung der in Fig. 3 nicht eingezeichneten Polschuhteile in eben dieser Richtung, in einen in einer Radialebene verlaufenden 90°-Bogenabschnitt über, welcher etwa im Scheitel des Meßkanalkörpers 1 endet. Hier schließt sich ein in entgegengesetzter Axialrichtung relativ zu dem anschlußnahen Axialstück verlaufendes Längenstück des Meßsignalleitungsabschnittes 6 an, welches größere Axiallänge hat, als die gesamte Axialerstreckung der Polschuhteile des Magnetfelderzeugungssystems. Schließlich folgt ein weiteres, nunmehr nach abwärts verlaufendes, kreisbogenförmiges Leiterstück über 90°, sodann ein axiales Längenstück und schließlich ein radial nach einwärts gerichtetes Längenstück des Meßsignalleitungsabschnittes 6 hin zu der Elektrode 4. Der vorher in Fig. 3 gezeigte Verlauf der Meßsignalleitungen für die Elektrode 4 gestattet es, diese weitestgehend in bestimmter Symmetrie zu der die Elektroden 3 und 4 enthaltenden Radialebene und zu dem den Strömungskanalabschnitt 2 durchsetzenden Magnetfeld zu führen, wobei lediglich das die 90°-Bogenabschnitte der Meßsignalleitung 6 verbindende axiale Leiterstück von den magnetischen Feldlinien getroffen wird und die Signalleitung zwei gleiche Anteile des magnetischen Feldes mit jeweils entgegengesetzter Orientierung durchläuft, so daß sich Induktionswirkungen in den beiden Anteilen gegenseitig aufheben.

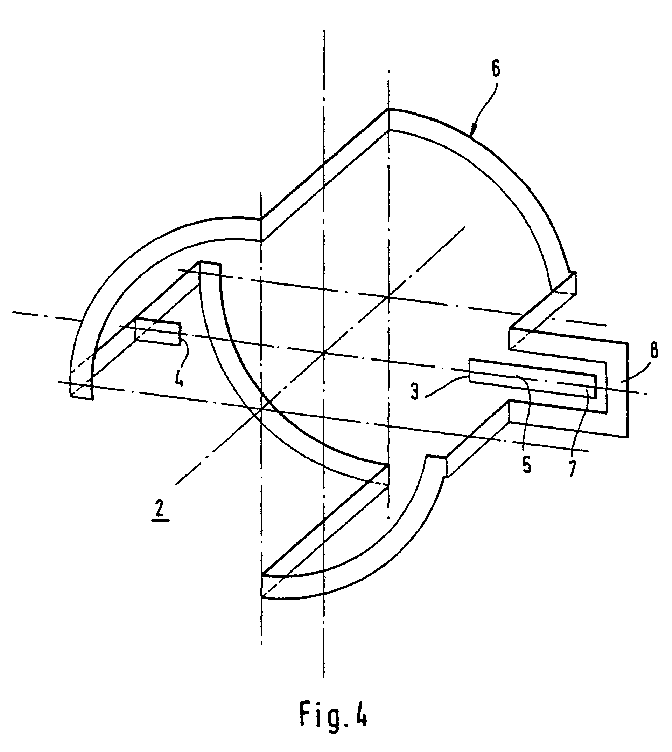

Fig. 4 zeigt eine Weiterbildung der den Elektroden 3 und 4 zugeordneten Leiteranordnung dergestalt, daß außer dem in Fig. 3 gezeigten, der Elektrode 4 zugeordneten Signalleitungsabschnitt 6 ein weiterer solcher Abschnitt spiegelbildlich angefügt ist, wie der Fachmann ohne weiteres aus Fig. 4 erkennt. Mit Bezug auf eine axiale Blickrichtung ergänzen sich die Viertelkreisbogen der Meßsignalleitungsabschnitte 6 zu einem der Elektrode 4 zugeordneten Kurzschlußring, der sich über den den Anschluß 7 U-förmig umrahmenden Anschluß 8 für die Meßsignalleitungsabschnitte 6 schließt.

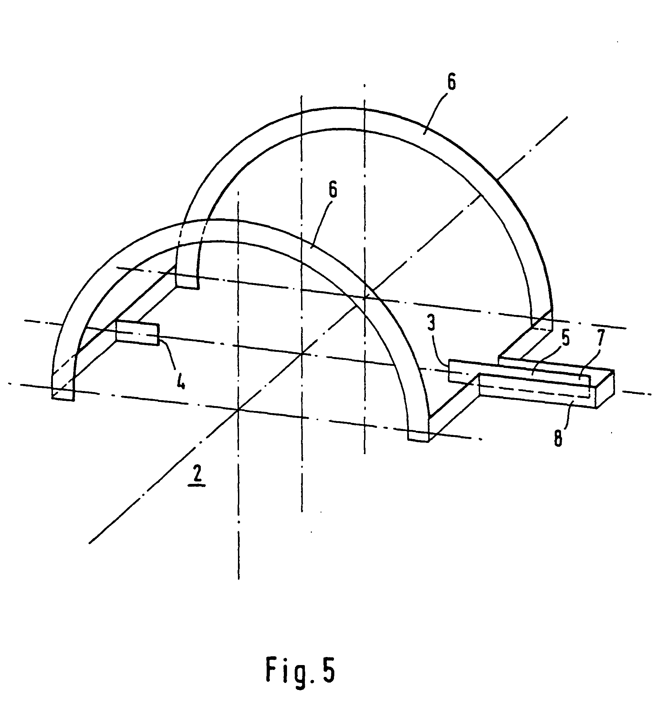

Eine andere Form der der Elektrode 4 zugeordneten Meßsignalleitungsabschnitte 6 zur Verwirklichung eines der Elektrode 4 zugeordneten Kurzschlußringes in Verbindung mit dem U-förmig gestalteten Anschluß 8 ist in Fig. 5 gezeigt. Der aus den Meßsignalleitungsabschnitten 6 gebildete Kurzschlußring umschlingt bei dieser Ausführungsform das senkrecht zur Verbindungslinie zwischen den Elektroden 3 und 4 und senkrecht zur Längsachse des Strömungskanalabschnittes orientierte Magnetfeld.

Zur Ausbildung der Konstruktionsteile, welche in den Meßkanalkörper eingeschlossen, insbesondere eingespritzt werden, nämlich der Baueinheiten aus den Elektroden 3 und 4, den Meßsignalleitungen 5 und 6 und den Anschlüssen 7 und 8, ist folgendes zu sagen:

In bestimmten Fällen kann es zweckmäßig sein, die Elektroden 3 und 4 aus einem speziellen Elektrodenmaterial, gegebenenfalls in Abstimmung auf das zu untersuchende Strömungsmittel, herzustellen und diese Elektroden dann durch Schweißung, Lötung oder dergleichen mit den zugehörigen Meßsignalleitungen zu verbinden.

Gemäß einer bevorzugten Ausführungsform bestehen aber die Meßsignalleitungen und die zugehörigen Anschlüsse aus ein und demselben Material wie die Elektroden 3 und 4, nämlich aus Elektrodenmaterial, und sind einstückig mit den Elektroden 3 und 4 verbunden.

In diesem Falle ist es möglich, die Elektroden, die Meßsignalleitungen und die Anschlüsse als Leiterblechstanzteile oder Leiterfolienstanzteile auszubilden, welche beispielsweise die in Fig. 2 gezeigte Form haben oder die auch in die in den Fig. 3 bis 5 gezeigten Formen abgebogen werden können, um dann die Leitergebilde in eine Spritzgußform einzusetzen und mit dem Meßkanalkörpermaterial zu umspritzen. Die Herstellung der Elektroden, der damit einstückig verbundenen Meßsignalleitungen und der aus dem Meßkanalkörper herausgeführten Anschlüsse als gestanzte Folienzuschnitte oder Blechzuschnitte bedingt über eine große Serie von herzustellenden Geräten hin gleichbleibende Eigenschaften des den Elektroden zugeordneten elektrischen Systems, insbesondere in elektrischer Hinsicht und in Zusammenwirkung mit dem Magnetfelderzeugungssystem.

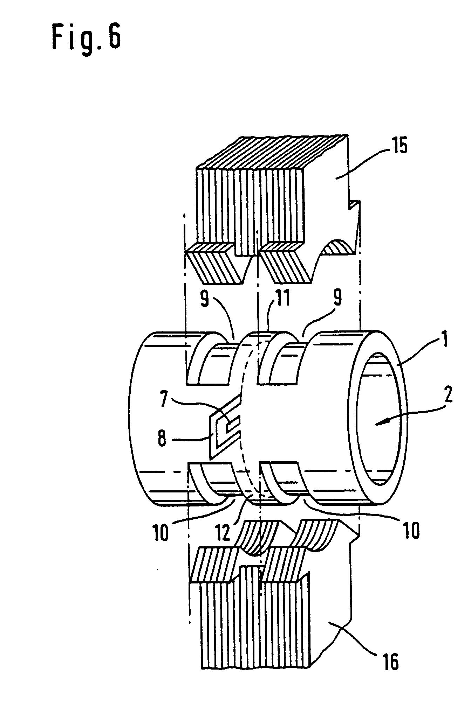

Fig. 6 zeigt eine andere spezielle Ausbildung der Fixierung des Meßkanalkörpers 1 relativ zu dem Magnetfelderzeugungssystem, dessen Polschuhe 15 und 16 ausschnittsweise in Fig. 6 in von dem Meßkanalkörper 1 radial abgerückten Zustand angedeutet sind.

Auf der Oberseite des Meßkanalkörpers 1 mit Bezug auf die in Fig. 6 gezeigte Stellung befindet sich eine hohlzylindersektorförmige Vertiefung 9 und auf der Unterseite des Meßkanalkörpers 1 mit Bezug auf die in Fig. 6 gezeigte Lage befindet sich entsprechend diametral gegenüberliegend eine hohlzylindersektorförmige Vertiefung 10. Die hohlzylindersektorförmige Vertiefung 9 und die hohlzylindersektorförmige Vertiefung 10 bestehen jeweils aus zwei axialen Abschnitten. Mit anderen Worten, die Vertiefungen 9 und 10 enthalten in ihrer axialen Mitte jeweils ringsektorförmige Stege 11 bzw. 12. Auf die Bedeutung dieser Stege wird weiter unten näher eingegangen. Die Tiefe der Vertiefungen 9 und 10 ist, so gewählt, daß der Grund der Vertiefungen durch Wandstücke ausreichender Stärke des Meßkanalkörpermaterials von dem Strömungskanalabschnitt des Meßkanalkörpers 2 getrennt bleibt.

In die Vertiefungen 9 und 10 werden in radialer Richtung auf die Längsachse des Strömungskanalabschnittes hin der Gestalt der Vertiefungen entsprechend geformte Polschuhteile der Polschuhe 15 bzw. 16 des Magnetfelderzeugungssystems des Durchflußmessers eingeschoben. Bei der in Fig. 6 gezeigten Ausführungsform bestehen die Polschuhe 15 und 16, die damit einstückig verbundenen, mit den Erregerwicklungen des Magnetfelderzeugungssystems umwickelten Kerne und die mit diesen wiederum zur Vervollständigung des magnetischen Schließungskreises verbundenen Jochteile aus drei axial aneinander anschließenden Paketen von Trafoblechen, nämlich zwei Trafoblechpaketen mit in die axialen Abschnitte der Vertiefungen 9 und 10 im zusammengebauten Zustand hineinreichenden Polschuhteilen und einem dazwischenliegenden Blechpaket mit in radialer Richtung weiter nach außen zurückspringender Profilierung derart, daß sich zwischen den außenliegenden Blechpaketen in den Polschuhen 15 und 16 in der Polschuhfläche eine Ringnut befindet, welche den ringsektorförmigen Steg 11 bzw. 12 aufnimmt.

Die Vertiefungen 9 und 10 und die darin eingreifenden Polschuhteile der Polschuhe 15 und 16 bewirken eine präzise gegenseitige Fixierung des Magnetfelderzeugungssystems und des Meßkanalkörpers 1 in zusammengebautem Zustand, so daß Ausricht- und Justierarbeiten zwischen den beiden genannten Baueinheiten nicht erforderlich sind. Außerdem werden die Polschuhflächen im zusammengebauten Zustand gegen den dünnwandigen Grund der Vertiefungen 9 und 10 angedrückt und gewähren den hier dünnwandigen Bereichen eine Abstützung gegen einen erhöhten Innendruck im Strömungskanalabschnitt 2. Die dünnwandigen Abschnitte ermöglichen geringere Abstände zwischen den Polschuhflächen und damit eine Erhöhung des gesamten Wirkungsgrades des Gerätes. Der Energieverbrauch für die Erregung des Magnetfelderzeugungssystems kann so weit herabgesetzt werden, daß Explosionsschutzbestimmungen eingehalten werden können.

In den ringsektorförmigen Stegen 11 und 12 des als Kunststoff-Spritzgußteil ausgebildeten Meßkanalkörpers 1 sind die Meßsignalleitungsabschnitte 6 eingebettet.

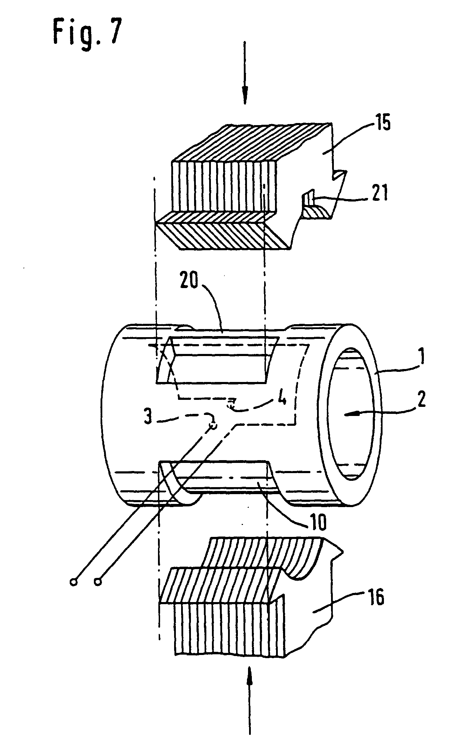

Bei der in Fig. 7 gezeigten Anordnung zur Bildung einer gegenüber der Ausführungsform nach Fig. 6 abgewandelten Ausführungsform eines induktiven Durchflußmessers der vorliegend angegebenen Art enthält die obere hohlzylindersektorförmige Vertiefung 9 des Meßkanalkörpers 1 einen axial verlaufenden, leistenförmigen Steg 20 und die Polschuhfläche des in die Vertiefung 9 eingreifenden Polschuhteils des Polschuhs 15 enthält entsprechend eine axial verlaufende Nut 21, welche den Steg 20 aufnimmt, wenn der Polschuh 15 radial in Richtung auf die Längsachse des Strömungskanalabschnittes 2 vorgeschoben ist und die Polschuhteile in die Vertiefung 9 eingreifen. Auf der gegenüberliegenden Seite befindet sich in der Wand des Meßkanalkörpers 1 eine durch keinen Steg unterteilte hohlzylindersektorförmige Vertiefung 10 und demgemäß befindet sich in der Polschuhfläche des in die Vertiefung 10 einzuschiebenden Polschuhteils des Polschuhs 16 auch keine Nut.

Auch bei der Ausführungsform nach Fig. 7 bestehen die Polschuhe, die damit einstückig verbundenen und mit der Erregerwicklung bewickelten Kerne sowie schließlich damit wiederum verbundene Jochteile zur Vollendung des magnetischen Rückschlusses aus Trafoblechpaketen.

Die auf der Innenseite des Meßkanalkörpers 1 befindliche Elektrode 3 ist unmittelbar über eine isolierte Meßsignalleitung durch die Wand des Meßkanalkörpers 1 hindurch zu dem Anschluß 7 verbunden. Demgegenüber hat die Verbindung zwischen der Elektrode 4 und dem Anschluß 8 zur Gewährleistung symmetrischer Lagen von Signalleitungsabschnitten relativ zu dem Magnetfeld des Magnetfelderzeugungssystems etwa den anhand von Fig. 3 beschriebenen Verlauf.

## Patentansprüche

1. Induktiver Durchflußmesser
- mit einem Meßkanalkörper (1), welcher einen Strömungskanalabschnitt (2) mit elektrisch isolierender Innenwand und zwei einander über einen Querschnitt des Strömungskanalabschnittes diametral gegenüberliegende, dem zu untersuchenden Strömungsmittelstrom ausgesetzte Elektroden (3, 4) enthält, die ebenso wie isoliert zu den Elektroden geführte Meßsignalleitungen (5, 6) und deren Verbindungsstellen zu den Elektroden in den Meßkanalkörper (1) eingeschlossen sind, und
- mit einem Magnetfelderzeugungssystem (15, 16), mit welchem ein den Strömungskanalabschnitt (2) im Bereich des genannten Querschnittes durchsetzendes, im wesentlichen senkrecht zur Verbindungslinie zwischen den Elektroden (3, 4) und senkrecht zur Längsachse des Strömungskanalabschnittes (2) orientiertes Magnetfeld zwischen Polschuhen des Magnetfelderzeugungssystems errichtet wird, welche aufeinander gegenüberliegenden Seiten des Meßkanalkörpers (1) angeordnet sind,
**dadurch gekennzeichnet, daß** die Meßsignalleitungen (5, 6) von Leiterfolien-Stanzzuschnitten oder Leiterblech-Stanzzuschnitten gebildet sind.

2. Durchflußmesser nach Anspruch 1, **dadurch gekennzeichnet, daß** die Meßsignalleitungen (5, 6) aus Elektrodenmaterial gebildet sind und daß die Elektroden (3, 4) einstückig mit den Meßsignalleitungen (5, 6) verbunden sind und Teil der Leiterfolien-Stanzzuschnitte oder Leiterblech-Stanzzuschnitte bilden.

3. Durchflußmesser nach Anspruch 2, **dadurch gekennzeichnet, daß** die Meßsignalleitungen (5, 6) als Leiterstreifen ausgebildet sind, welche mit ihrer breiten Abmessung im wesentlichen parallel zu dem vom Magnetfelderzeugungssystem erzeugten Magnetfeld ausgerichtet in den Meßkanalkörper (1) eingebettet sind.

4. Durchflußmesser nach einem der Ansprüche 1 bis 3, **dadurch gekennzeichnet, daß** der Meßkanalkörper (1) in seiner die Elektroden (3, 4) enthaltenden Querschnittsebene geteilt und aus zwei Formkörpern insbesondere zusammensteckbar ausgebildet ist und daß die Elektroden (3, 4), die Meßsignalleitungen (5, 6) und ihre Verbindungsstellen zu den Elektroden in passende Ausnehmungen der Teilfuge eingeschlossen sind.

5. Durchflußmesser nach einem der Ansprüche 1 bis 3, **dadurch gekennzeichnet, daß** der Meßkanalkörper (1) als Spritzguß-Formteil ausgebildet ist, in welches die Elektroden (3, 4), die Meßsignalleitungen (5, 6) und ihre Verbindungsstellen zu den Elektroden mindestens teilweise eingegossen sind.

6. Durchflußmesser nach Anspruch 5, **dadurch gekennzeichnet, daß** die Elektroden (3, 4) und/oder die Meßsignalleitungen (5, 6) mit über die Außenfläche des Meßkanalkörpers (1) vorstehenden Ansätzen (7, 8, 112) versehen sind, welche dazu bestimmt sind, bei der Herstellung des Meßkanalkörpers in Kernlager der Spritzgußform eingesetzt zu werden.

7. Durchflußmesser nach einem der Ansprüche 1 bis 6, **dadurch gekennzeichnet, daß** die zu der Elektrode (3) auf der einen Seite des Meßkanalkörpers führende Meßsignalleitung (5) die Meßkanalkörperwand direkt in Radialrichtung durchdringt, während die zur anderen Elektrode (4) führende Meßsignalleitung (6) zu dem Magnetfeld des Magnetfelderzeugungssystems und zu der die Elektroden (3, 4) enthaltenden Querschnittsebene symmetrische Meßsignalleitungsabschnitte (6) aufweist.

8. Durchflußmesser nach Anspruch 7 und Anspruch 5 oder 6, **dadurch gekennzeichnet, daß** die Meßsignalleitungsabschnitte (6) innerhalb des Meßkanalkörpers (1) axial verlaufende Leitungsstücke aufweisen, die zwischen Querschnittsebenen stromauf und stromab von dem vom Magnetfelderzeugungssystem eingenommenen Querschnittsbereich des Meßkanalkörpers (1) und/oder von solchen Querschnittsbereichen zu dem die Elektroden enthaltenden Querschnittsbereich des Meßkanalkörpers verlaufen.

9. Durchflußmesser nach Anspruch 8, **dadurch gekennzeichnet, daß** mindestens einer der axial verlaufenden Längenstücke der Meßsignalleitungsabschnitte (6) in einem axialen leistenartigen Steg der Wand des Meßkanalkörpers (1) verläuft.

10. Durchflußmesser nach einem der Ansprüche 5 bis 9, **dadurch gekennzeichnet, daß** am Meßkanalkörper (1) und/oder an gegen diesen von außen angelegten Polschuhteilen der Polschuhe (15, 16) des Magnetfelderzeugungssystems in der Form angepaßte Vertiefungen und/oder Vorsprünge (110 bzw. 9, 10) zum Festlegen der gegenseitigen Lage des Magnetfelderzeugungssystems und des Meßkanalkörpers (1) vorgesehen sind.

11. Durchflußmesser nach Anspruch 10, **dadurch gekennzeichnet, daß** der Meßkanalkörper (1) auf seinen den Polschuhen (15, 16) benachbarten, einander gegenüberliegenden Wandseiten der jeweiligen Polschuhform angepaßte Vertiefungen (9, 10) zur Aufnahme der dem Strömungskanalquerschnitt zugewandten Polschuhteile aufweist, derart, daß mindestens bereichsweise die einander zugekehrten Polschuhflächen über Meßkanalkörpermaterial verringerter Wandstärke vom Strömungskanalabschnitt (2) getrennt sind.

12. Durchflußmesser nach Anspruch 11, **dadurch gekennzeichnet, daß** die Vertiefungen (9, 10) der Wandseiten des Meßkanalkörpers (1) mindestens einen axialen, leistenförmigen (20) oder radialen, kreisringsektorförmigen Steg (11, 12) aus Meßkanalkörpermaterial enthalten, welcher einen Meßsignalleitungsabschnitt (6) enthält und der in einer entsprechend geformten axialen bzw. radialen Ausnehmung (21) oder Unterbrechung eines Polschuhteils oder der Polschuhteile Aufnahme findet.

## Claims

1. An inductive flow meter
- with a measurement channel body (1) that incorporates a flow channel section (2) with electrically insulating inner wall and two electrodes (3, 4) that are diametrically opposed to each other across a cross section of the flow channel section and exposed to the medium that is under investigation, and which are enclosed in the measurement channel body (1) in the same way as insulated measurement signal lines (5, 6) that lead to the electrodes and the connecting points to the electrodes, and
- with a magnetic field generating system (15, 16), with which a magnetic field that passes through the flow channel section (2) in the area of said cross section, which is essentially perpendicular to the connecting line between the electrodes (3, 4) and perpendicular to the longitudinal axis of the flow channel section (2) is established between the pole shoes of the magnetic field generating system, said pole shoes being arranged on opposing sides of the measurement channel body (1),
**characterized in that** the measurement signal lines (5, 6) are stamped out blanks of conductive foil or conductive sheet metal.

2. A flow meter as defined in Claim 1, **characterised in that** the measurement signal lines (5, 6) are formed from electrode material; and **in that** the electrodes (3, 4) are connected in one piece to the measurement signal lines (5, 6) and form part of the stamped out conductive foil blanks or the conductive sheet metal blanks.

3. An inductive flow meter as defined in Claim 2, **characterised in that** the measurement signal lines (5, 6) are formed as conductor strips that are embedded in the measurement channel body (1) with their wide dimension oriented so as to be essentially parallel to the magnetic field generated by the magnetic field generating system.

4. A flow meter as defined in one of the Claims 1 to 3, **characterised in that** the measurement channel body (1) is divided in its cross-section plane that contains the electrodes (3, 4) and is formed from two shaped bodies that can be combined; and **in that** the electrodes (3, 4), the measurement signal lines (5, 6), and their connection points to the electrodes are sealed into matching recesses on the parting line.

5. A flow meter as defined in one of the Claims 1 to 3, **characterised in that** the measurement channel body (1) is an injection moulded shaped part in which the electrodes (3, 4), the measurement signal lines (5, 6), and their collection points to the electrodes are cast, at least in part.

6. A flow meter as defined in Claim 5, **characterised in that** the electrodes (3, 4) and/or the measurement signal lines (5, 6) are provided with extensions (7, 8, 112) that project beyond the outer surface of the measurement channel body (1), these extensions being intended for insertion into the core print of the injection mould during production of the measurement channel body.

7. A flow meter as defined in one of the Claims 1 to 6, **characterised in that** the measurement signal line (5) that leads to the electrode (3) on one side of the measurement channel body passes through the measurement channel body wall directly in a radial direction, whereas the measurement signal lines (6) that lead to the other electrode (4) incorporate measurement signal lines sections (6) that are symmetrical to the magnetic field of the magnetic field generating system and to the cross section plane that contains the electrodes (3, 4).

8. A flow meter as defined in Claim 7 and Claim 5 or Claim 6, **characterised in that** the measurement signal lines sections (6) within the measurement channel body (1) incorporate axially routed line sections that run upstream and downstream between cross section planes from the cross section area of the measurement channel body (1) that is occupied by the magnetic field generating system and/or from such cross section areas to the cross-section area of the measurement channel body that contains the electrodes.

9. A flow meter as defined in Claim 8, **characterised in that** at least one of the axially routed long pieces of the measurement signal lines sections (6) runs in an axial rail-like rib of the wall of the measurement channel body (1).

10. A flow meter as defined in one of the Claims 5 to 9, **characterised in that** on the measurement channel body (1) and/or on pole shoe elements of the pole shoes (15, 16) of the magnetic field generating system that lie against this from the outside there are recesses and/or projections (110 or 9,10) that are of a matching shape for securing the relative positions of the magnetic field generating system and of the measurement channel body (1).

11. A flow meter as defined in Claim 10, **characterised in that** on its side walls that are adjacent to the pole shoes (15, 16) and opposite to each other, the measurement channel body (1) incorporates recesses (9, 10) that match the shape of the particular pole shoe and accommodate the pole shoe elements that are proximate to the flow channel cross-section in such a way that at least in some areas the pole shoe surfaces that face each other are separated from the flow channel section (2) wall by measurement channel body material that is of reduced thickness.

12. A flow meter as defined in Claim 11, **characterised in that** the recesses (9, 10) in the side walls of the measurement channel body (1) incorporate at least one axial, rail-like (20) or radial curved rib (11, 12) that is of measurement channel body material, this rib containing a measurement signal line section (6) and being situated in an appropriately shaped axial or radial recess (21) or break in a pole shoe element or the pole shoe element receptacle.

## Revendications

1. Débitmètre inductif
- ayant un corps de canal de mesure (1), qui contient un tronçon de canal d'écoulement (2) ayant une paroi intérieure électriquement isolante et deux électrodes (3, 4) diamétralement opposées l'une à l'autre par une section transversale du tronçon de canal d'écoulement, exposées au courant de fluide à étudier, les lignes de signal de mesure (5, 6) conduisant de façon également isolée aux électrodes, et dont les positions de liaison aux électrodes sont incluses dans le corps de canal de mesure (1), et
- ayant un système générant un champ magnétique (15, 16) avec lequel est établi un champ magnétique traversant la tronçon de canal d'écoulement (2) dans la zone de ladite section transversale, orienté sensiblement perpendiculairement à la ligne de liaison entre les électrodes (3, 4) et perpendiculairement à l'axe longitudinal du tronçon de canal d'écoulement (2), entre des masses polaires du système générant un champ magnétique, lesquelles sont disposées sur les côtés opposés l'un à l'autre du corps de canal de mesure (1),
**caractérisé en ce que** les lignes de signal de mesure (5, 6) sont formées de coupes estampées de feuille conductrice ou de coupes estampées de tôle conductrice.

2. Débitmètre selon la revendication 1, **caractérisé en ce que** les lignes de signal de mesure (5, 6) sont formées à partir d'une matière d'électrode et que les électrodes (3, 4) sont reliées d'un seul tenant aux lignes de signal de mesure (5, 6) et font partie des coupes estampées de feuille conductrice ou des coupes estampées de tôle conductrice.

3. Débitmètre selon la revendication 2, **caractérisé en ce que** les lignes de signal de mesure (5, 6) sont formées en tant que pistes conductrices, qui sont encastrées dans le corps de canal de mesure (1), orientées avec leur dimension de largeur sensiblement parallèle au champ magnétique produit par le système générant un champ magnétique.

4. Débitmètre selon l'une quelconque des revendications 1 à 3, **caractérisé en ce que** le corps de canal de mesure (1) est partagé dans son plan de section transversale contenant les électrodes (3, 4) et est formé de deux corps moulés, en particulier emboîtables et **en ce que** les électrodes (3, 4), les lignes de signal de mesure (5, 6) et leur position de liaison aux électrodes sont incluses dans des creux adaptés de la jointure partielle.

5. Débitmètre selon l'une quelconque des revendications 1 à 3, **caractérisé en ce que** le corps de canal de mesure (1) est formé en tant que pièce moulée par injection, dans laquelle les électrodes (3, 4), les lignes de signal de mesure (5, 6) et leur position de liaison aux électrodes sont au moins partiellement coulées.

6. Débitmètre selon la revendication 5, **caractérisé en ce que** les électrodes (3, 4) et/ou les lignes de signal de mesure (5, 6) sont munies d'appendices (7, 8, 112) se projetant au-dessus de la surface externe du corps de canal de mesure (1), lesquelles sont destinées à être insérées dans le logement de noyau du moule lors de la fabrication du corps de canal de mesure.

7. Débitmètre selon l'une quelconque des revendications 1 à 6, **caractérisé en ce que** la ligne de signal de mesure (5) menant à l'électrode (3) sur l'un des côtés du corps de canal de mesure traverse directement la paroi du corps de canal de mesure dans la direction radiale, tandis que la ligne de signal de mesure (6) menant à l'autre électrode (4) comprend des sections de ligne de signal de mesure, symétriques (6) par rapport au champ magnétique du système générant un champ magnétique et par rapport au plan transversal contenant les électrodes (3, 4).

8. Débitmètre selon la revendication 7 et selon la revendication 5 ou 6, **caractérisé en ce que** les sections de ligne de signal de mesure (6) comprennent à l'intérieur du corps de canal de mesure (1) des fragments de ligne se prolongeant axialement, qui se prolongent entre des plans de section transversale en amont et en aval de la zone de section transversale du corps de canal de mesure (1) occupée par le système générant un champ magnétique et/ou de telles zones de section transversale jusqu'à la zone de section transversale du corps de canal de mesure, contenant les électrodes.

9. Débitmètre selon la revendication 8, **caractérisé en ce qu'**au moins un des fragments longitudinaux se prolongeant axialement, des sections de ligne de signal de mesure (6) se prolonge dans un pont axial du type entretoise de la paroi du corps de canal de mesure (1).

10. Débitmètre selon l'une quelconque des revendications 5 à 9, **caractérisé en ce que** des creux et/ou des projections (110 ou 9, 10) d'une forme adaptée sont prévus sur le corps de canal de mesure (1) et/ou sur les pièces polaires de la masse polaire (15, 16) du système générant un champ magnétique, appliquées contre celui-ci depuis l'extérieur, en vue de fixer la position mutuelle du système générant un champ magnétique et le corps de canal de mesure (1).

11. Débitmètre selon la revendication 10, **caractérisé en ce que** le corps de canal de mesure (1) comprend des creux (9, 10) adaptés à la forme de la masse polaire respective sur ses côtés de paroi, opposés l'un à l'autre, voisins des masses polaires (15, 16), en vue de recevoir les pièces polaires tournées vers la section transversale du canal d'écoulement, de sorte qu'au moins par zones, les surfaces de masse polaire faisant dos l'une à l'autre sont séparées du tronçon de canal d'écoulement (2) par une épaisseur de paroi amincie constituée de matière du corps de canal de mesure.

12. Débitmètre selon la revendication 11, **caractérisé en ce que** les creux (9, 10) des côtés de paroi du corps de canal de mesure (1) contiennent au moins un pont (11, 12) axial en forme d'entretoise (20) ou radial, en forme de secteur annulaire de cercle, constitué de matière du corps de canal de mesure, lequel pont contient une section de ligne de signal de mesure (6) et qui trouve place dans une ouverture ou creux (21), axial ou radial, façonné de manière appropriée, d'une pièce polaire ou des pièces polaires.
